Europäisches Patentamt

**European Patent Office**

**Office européen des brevets**

(11) Publication number: **0 075 461**
A2

(12)

# EUROPEAN PATENT APPLICATION

(21) Application number: **82304913.5**

(22) Date of filing: **17.09.82**

(51) Int. Cl.³: **G 03 C 1/72,** B 41 M 5/24

(30) Priority: **17.09.81 JP 145488/81**

(43) Date of publication of application: **30.03.83**
**Bulletin 83/13**

(84) Designated Contracting States: **DE GB**

(71) Applicant: **KONISHIROKU PHOTO INDUSTRY CO. LTD.,**
**No. 26-2, Nishishinjuku 1-chome Shinjuku-ku,**
**Tokyo 160 (JP)**

(72) Inventor: **Nishi, Shinichi, 2-5-19 Owada-cho, Hachioji-shi**
**Tokyo (JP)**
Inventor: **Hiruma, Kinu, 1-20-3 Akebono-sho,**
**Tachikawa-shi Tokyo (JP)**
Inventor: **Takahashi, Toshiaki, 4328-1 Nakato,**
**Musashimurayama-shi Tokyo (JP)**
Inventor: **Shimada, Fumio, 3-5-20 Kawasaki**
**Hamura-machi, Nishitama-gun Tokyo (JP)**

(74) Representative: **Ellis-Jones, Patrick George Armine et**
**al, J.A. KEMP & CO. 14 South Square Gray's Inn, London**
**WC1R 5EU (GB)**

(54) **An optical information recording medium.**

(57) An optical information recording medium is produced by exposing and developing a dispersion layer containing fine grains of a photosensitive copper compound on a support.

EP 0 075 461 A2

- 1 -

## AN OPTICAL INFORMATION RECORDING MEDIUM

The present invention relates to an optical information recording medium.

As an information recording medium, demand has recently been increased for the so-called optical disk whereby a high density recording is possible and access time is short. The optical disk is a medium with which the recording of information and the reproduction thereof are made using a laser beam making high illuminance and a short time exposure possible. Such an optical recording medium may be one wherein a metallic or semi-metallic film is provided with a pit (e.g. fine melted pit) formation, a chalcogen film and a semi-metallic film, recordal being made by a change in optical properties caused by a crystalloidalamorphous state change.

However, such an optical information recording medium has the disadvantage that its manufacture involves a batch type vacuum evaporation method or a sputtering method which is expensive; furthermore, film manufactured is inferior as regards its secular stability and quite a few of them, such as Te or a chalcogenide, are toxic.

Further, an improvement in the sensitivity of the recording medium is now needed as a low output semi-conductor laser has frequently been used as a light source for optical information recording and reproducing apparatus. The low output semiconductor laser has the merit that the price and dimensions thereof are lower by two figures compared with an ordinary gas laser such as He-Ne gas laser or an Ar ion laser and, further, that direct modulation is possible.

- 2 -

It is widely known that a high sensitivity for the recording medium can be attained by lowering the thermal conductivity on the surface of the recording layer and by using effectively the heat converted from the light absorbed with the irradiation of the laser beam which does not diffuse for the pit formation. Thus, reflective metallic grains may be covered by organic high polymers with a low thermal conductivity; in Japanese Patent Publication Open to Public Inspection No 108995/1980, for example, there is a disclosure that the heated and treated film of photographically treated blackened silver in the shape of a filament can be used as an optical information recording layer. However, this recording medium has the disadvantage that it employs expensive silver.

An object of the present invention is to provide a sensitive, innoxious and inexpensive optical information recording medium in order to reduce the drawbacks of conventional technology.

According to the present invention there is provided an optical information recording medium characterized in that a recording layer thereof is prepared through developing after exposure a dispersion layer containing fine grains of photosensitive copper compound.

An advantage of the present invention lies in the fact that inexpensive materials can be used; also manufacture on a continuous conveyor system is possible. Further it is harmless environmentally. Another merit of the present invention is that the tracks, address signals or visible images for identification can be recorded by printing using a photographic operation in advance.

According to a preferred embodiment of the present invention, the photosensitive copper compound is a cuprous halide indicated by the general formula $Cu_xM_yX$ (where M represents a metal other than copper, X represents one or more halogen atoms selected from Cl, Br and I and x and y are defined by the relations:

$$0.5 < x < 1.0 \quad \text{and} \quad 0 < y < 0.5.)$$

The copper dispersion layer wherein fine grains of cuprous halide are formed according to the photographic procedure as in the present invention has the advantage that the grain diameter is extremely small. Therefore, the use of the medium of the present invention requires less recording energy. Thus, the recording medium has a high sensitivity and the SN ratio for reproduction is excellent. The photographic procedure mentioned here includes the processes of exposure, development and fixing, as in ordinary photography.

The present invention is illustrated further, merely by way of example, with reference to the accompanying drawings.

Figure 1 illustrates a photosensitive cuprous halide emulsion-coated dry plate,

Figure 2 shows a cross-sectional view of an information recording medium of this invention after development and

Figure 3 shows a cross-sectional view of an information recording medium after heat treatment.

Figure 4 shows a cross-sectional view of a recording medium on which a patterned exposure has been made.

Figures 5 and 6 show a cross-sectional view of a recording medium having a protective layer and a subbing layer respectively.

- 4 -

Figure 7 shows a pit recorded a medium of Figure 3 by the laser beam.

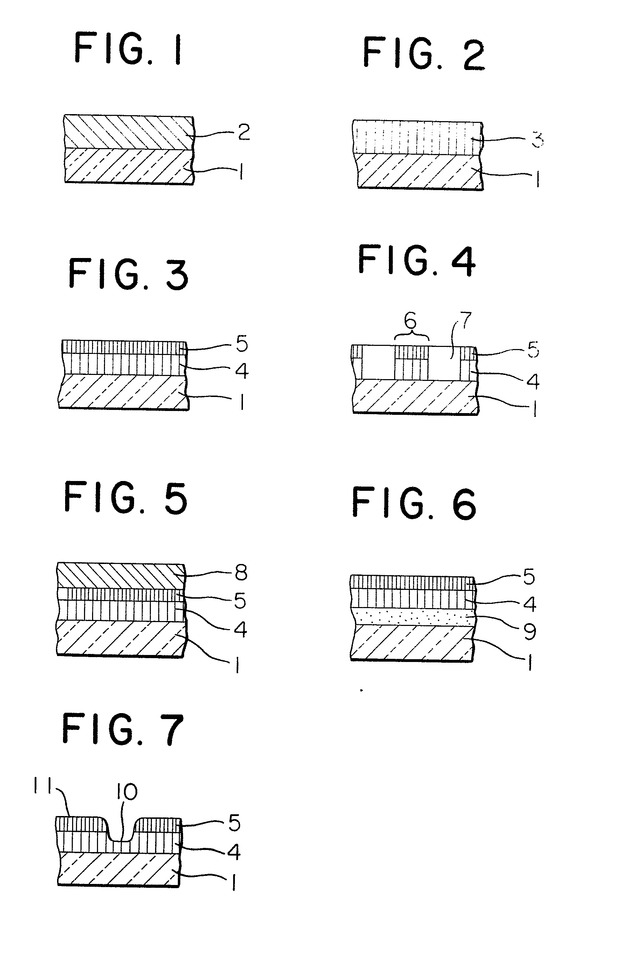

Figure 1 shows a cross-sectional view of a precursor of the optical information recording medium in which 1 represents a base plate and 2 represents an emulsion layer containing fine grains of photosensitive cuprous halide.

The base plate may be either transparent, translucent or opaque; the only requirement is that it should have excellent dimensional stability at high temperatures; typically it is of glass, metal, ceramic or polyimide resin.

Cuprous halide emulsions can be obtained by reducing divalent copper ions with ascorbic acid derivatives or alkaline metallic salts thereof, for example, in the presence of halogen ions; the presence of a protective colloid, typically in an amount from 0.1 - 5% is preferred. If the amount of protective colloid is less than 0.1%, condensed cuprous halide crystals tend to be produced and when it exceeds 5%, crystals grow big owing to a decrease in stirring efficiency of the reaction solutions, both of which are undesirable.

As a source of $Cu^{2+}$ ions to be used for the preparation of the photosensitive copper compound emulsion used in the present invention, water-soluble inorganic cupric salts such as cupric nitrate, copper nitrate, cupric chloride and cupric bromide, for example, may be mentioned. As a source of halogen ions, on the other hand, alkali metal halides such as potassium chloride, sodium chloride, potassium bromide, sodium bromide, potassium iodide and sodium iodide, for example, can be mentioned. When cupric halide is used as a source of $Cu^{2+}$ ions, it is not necessary to add an alkali metal halide as a source of halogen ions but when preparing mixed crystals containing two or more halides such as cuprous chloro bromide and cuprous iodo bromide crystal, an alkali metal halide may be added. Further, as a source of silver ions, silver nitrate is used advantageously. Further, silver halide colloidal grains are generally fine grains with a diameter of 0.1 μ or less substantially made from silver halide such as silver chloride, silver bromide, silver iodide, silver chlorobromide, silver iodobromide or silver chloroiodobromide, for example. When other metal ions are present, they can be supplied in the same way as the silver ions as colloidal grains of mixed crystals.

As a reducing agent for $Cu^{2+}$ ions to be used for the preparation of photosensitive copper compound emulsion used in the present invention, sulfurous acid, an alkali metal salt of sulfurous acid, nitrous acid, an alkali metal salt of nitrous acid, L-ascorbic acid, an ascorbic acid derivative (e.g. l-erythro-ascorbic acid or α-glycoascorbic acid), or an alkali metal salt of an ascorbic acid derivative, hydrazine, phenylhydrazine, triphenyl.phosphite, aminoborane, dialkyl. amino.borane (e.g. dimethyl.amino.borane) are used advantageously.

In the present invention, as a protective colloid, a hydrophilic high polymer compound, natural high polymer compound such as gelatin, a gelatin derivative, gum arabic, albumin or agar, or any hydrophilic high polymer compound used for a silver halide emulsion containing a synthesized high polymer compound such as polyvinylalcohol, polyvinylpyrrolidone, cellulose ether or partially hydrolyzed cellulose acetate can be used.

The composition of the photosensitive cuprous halide may be indicated by aforesaid general formula CuxMyX wherein M represents a metal other than copper such as Au, Ag, Ni, Pd or Pt and X represents one or more halogen atoms which are Cl, Br or I. These metals (other than Cu) and halogen atoms have an influence on the copper halide crystal in the emulsion and on the grain diameter and crystal quality of the mixed crystal and their photosensitivity varies with their composition. It is desirable that x and y are such that $0.5 < x < 1.0$ and $0 < y < 0.5$. The composition: Cu 0.97, Ag 0.03, Br 0.9, I 0.1 is preferred.

It is possible to add hardeners, coating aids or sensitizers, for example, to the cuprous halide emulsion as desired.

Cuprous halide emulsion containing $Ag^+$ or other metal ions may be coated on the base plate by any coating method such as blade coating, air-knife coating, bar coating and roll coating.

The dry photosensitive cuprous halide emulsion layer prepared in the aforesaid manner becomes dispersion layer containing metallic copper grains, 3 in Figure 2, upon photographic exposure, development and fixing.

Exposure may be made with chemical radiation emitted from a mercury arc lamp, an incandescent lamp or a xenon lamp, for example, and development should be carried out so that the maximum transmission density can be obtained.

When an appropriate mask is used for the exposure, it is possible to divide the recording portion by using laser beams of different kinds and to prepare a disk having, in advance, a control signal such as a timing signal. Further, in a discoidal disk, it is possible to print servo tracks and recording section tracks by such photographic procedures. Further as shown in Figure 4, an exposed reflective track area 6 and a transparent unexposed area 7 may be obtained through such photographic procedures; this is also one of the features of the present invention wherein photosensitive copper compound emulsion is used.

The developing solution for developing the dispersion layer contains a reducing agent such as metol, hydroquinone, aminophenol, 1-phenyl-3-pyrazolidone, N-(4-hydroxyphenyl)glycine or L-ascorbic acid.

The developing solution may further contain a chelating agent for $Cu^{2+}$ such as an amine compound like ethylenediamine, triethylene tetramine, ethylenediamine tetra acetic acid, nitrilo triacetic acid, diethylenetriamine penta acetic acid or triethylene tetramine hexa acetic acid or an amino acid like glycine, alanine, aspartic acid or L-ascorbic acid.

The pH of the developer is generally in the alkaline range of 7 - 14 and preferably 8 - 13.

After development, it is possible to enhance the reflectivity by supplying metallic atoms through further physical development. As developers for physical development, copper salt (e.g. $CuCl_2$, CuSCN, $Cu(NO_3)_2$), gold salt (e.g. sodium salt), silver salt (e.g. AgCl, AgBr, AgI, $AgNO_3$, $Ag_2SO_4$, AgS), Pd complex salt (e.g. oxalic acid, malonic acid salt), iron salt (e.g. oxalate, nitrate), lead salt (e.g. $PbCl_2$, $PbBr_2$, PbO), $HgCl_2$, $BiCl_3$ $TeCl_4$, $InCl_3$ or $InBr_3$ may be used.

The physical developments carried out are all widely known and conventional developers may be used therefor. Thus, an alkaline solution or acidic solution at least containing the developing agent may be used.

Fixing is optional; it is possible to use the ordinary fixer containing sodium thiosulfate or ammonium thiosulfate. A fixer containing ammonium thiocyanate, aluminum thiocyanate or thiourea, for example, can also be used. The fixer may be acidic, neutral or alkaline and it can contain an acidic agent such as acidic sodium sulfite and potassium metabisulfite, a preservative such as sodium sulfite, a buffer such as boric acid or sodium metaborate and an appropriate hardener.

By this photographic operation, an organic substance layer in which reflective copper or copper fine grains containing other metals such as gold, silver or platinum are dispersed, can be obtained. If the reflectivity thereof is appropriate, it can be used as an optical information recording medium without further treatment. When the reflectivity is insufficient, it is possible to increase the reflectivity by heat treatment processes.

In the present invention, the thickness of the dispersion layer of fine grains mainly composed of ordinary copper can be reduced by the heat treatment and thereby the reflectivity on the surface increased. In Figure 3, the heat-treated dispersion layer on the base plate 1 is composed of a surface layer 5 with a relatively high metal concentration and a lower, thicker layer 4 with a relatively low metal concentration.

The advantages of a heat treatment include an increase in reflectivity, hardening of the film caused by a decrease of the film thickness and packing of dispersed metal grains. Thus, the reflectivity rises, as a result of the heat treatment, to, say, 20% to 50% from a few % and it is possible to obtain an optical information recording medium which is suitable for use in the reflective reading method for record reproducing. Radiation type heating is preferable for uniform heating over the entire surface of the dispersion layer but the heating methods employing a convection type oven or a contact type heat source can also be used. Heating should be conducted in the absence of oxygen under ordinary pressure but use of reduced pressure is preferable so as to reduce blackening on the surface caused by the oxidation of copper. Specifically, heating can be carried out in an inactive gas such as $N_2$, Ar or He gas, for example, or in a pressure-reducing apparatus. Heating under reduced pressure provides a greater reduction in film thickness and a greater increase in reflectivity.

The heating temperature need only be such that the reflection properties on the surface improve; a temperature range of 200°C - 400°C is preferable. When the temperature exceeds 400°C, excessive dissolution or destruction by fire of organic high polymer compound such as gelatin can occur, which is not desirable. The heating period is suitably 1 minute to 30 minutes; the optimum heating period depends upon the composition of the cuprous halide compound - 10-minutes heating at 350°C under the reduced pressure is preferable for the composition of Cu 0.97, Ag 0.03, Br 0.9 and I 0.3.

The film thickness of the reflective information recording layer formed in the above manner is generally from 1000 $\overset{\circ}{A}$ to 10 $\mu$ and especially about 1 $\mu$. With a thickness of less than 1000 $\overset{\circ}{A}$, it can be difficult to obtain a stable film and with a thickness exceeding 10 $\mu$, it is less economic in that the dispersion layer does not serve fully effectively as a recording layer.

As shown in Figure 5, it is possible to provide a light-pervious protective film 8 on the optical information recording layer of the present invention. Epoxy resins, transparent melamine, silicone, polycarbonate and acrylic resins, for example, can be used for the formation of said protective film.

In order to increase adhesion between the aforesaid information recording layer and the base plate, it is also possible to provide the subbing layer (9 in Figure 6) made of, say, gelatin or cellulose high polymer. By adding silane coupling agent or titanium

- 10 -

coupling agent to said subbing layer, it is possible to improve the adhesive properties without adversely affecting the recording properties.

On the optical information recording medium of the present invention, a concave pit (symbol 10 in Figure 7) can be formed by a laser beam modulated according to the information. Typically a gas laser such as the laser of Ar, He-Ne or Kr or a semiconductor laser such as the laser of Ga-As can be used. Reproduction of information is possible owing to the fact that the reflectivity on the surface of aforesaid pit is smaller than that of the non-recorded area 11.

The present invention is further illustrated in the following Examples.

Example 1

The following solution-1 was kept at a temperature of 40°C and, while it was being stirred, the following solution-2 and solution-3 were started to be added to the solution-1 at the same time by the double-jet method; they were added at the rate of 110 ml/min and 60 ml/min respectively. The temperature for physical ripening was kept at 40°C. After washing and desalting, solution-4 was added thereto and stirred for 30 minutes at 40°C for redispersing and the total volume thereof was adjusted to 500 ml using distilled water.

Solution-1

| | |
|---|---|
| Ocein gelatin | 30 g |
| Distilled water | 500 ml |

Solution-2

| | |
|---|---|
| KBr | 63.8 g |
| KI | 8.8 g |
| L-ascorbic acid | 47.6 g |
| Distilled water | 550 ml |

- 11 -

<u>Solution-3</u>

| | |
|---|---|
| $Cu(NO_3)_2 \cdot 3H_2O$ | 63.8 g |
| $AgNO_3$ | 4.5 g |
| Distilled water | 330 ml |

<u>Solution-4</u>

| | |
|---|---|
| Ocein gelatin | 20 g |
| Distilled water | 200 ml |

This emulsion will hereinafter be referred to as EM-1. The average grain diameter of EM-1 was $0.8 \pm 0.03 \mu$ according to the electron microscope photography. Through wire-bar coating, EM-1 was coated on a gelatin-subbed glass plate to a thickness of 1.6 mm; the thickness of the coated film was $64.8 \mu$ which was dried after setting and an emulsion layer of Cu 0.97 Ag 0.08 Br 0.91 I 0.09 with a dried thickness of $3.7 \mu$ was obtained.

After exposing aforesaid emulsion-coated dry plate to indoor light for 5 minutes, development for 10 minutes at 25°C was made using the following developer-1 and a sample having a copper color gloss and a reflectivity of 10% was obtained.

| <u>Developer-1</u> | |
|---|---|
| Metol | 15 g |
| L-ascorbic acid | 31 g |
| Sodium metaborate | 24.5 g |
| Distilled water | 1ℓ |

This sample was heated for 10 minutes at $340 \pm 10°C$ under a reduced pressure of $10^{-5}$ Torr and an optical information recording medium with a reflectivity of 30% was obtained.

- 12 -

On this information recording medium, a pit-recording was made using a He-Ne laser on which a pulse modulation of 100 n sec was applied using a sound-optics modulating element. The wavelength of the laser beam was 6328 Å, the beam diameter was 1.0 $\mu$, the laser intensity on the recording surface was 10 mW and the laser beam scanning speed was 5.0 m/sec. The recorded pit was read with reflected light from a He-Ne laser for reproduction, the laser intensity as the disk surface being 2 mW and the contrast ratio thereof 0.6 to 0.7 (excellent) and the recording and reproducing SN ratio was more than 40 dB.

### Example 2

The temperature of the following solution-5 was kept at 45°C and the following solution-6 was mixed with it quickly and distilled water was added after washing and desalting to make a total volume of 180 ml.

### Solution-5

| | |
|---|---|
| KBr | 34.0 g |
| KI | 2.3 g |
| L-ascorbic acid | 21.6 g |
| Ocein gelatin | 5.0 g |
| Distilled water | 350 ml |

### Solution-6

| | |
|---|---|
| $Cu(NO_3)_2 \cdot 3H_2O$ | 21.2 g |
| $AgNO_3$ | 7.5 g |
| Distilled water | 300 ml |

This emulsion will hereinafter be referred to as EM-2. By bar-coating, EM-2 was coated on a gelatin-subbed glass plate to a thickness of 1.6 mm; the thickness of the coated film was 64.8 $\mu$ which was dried after setting to give an emulsion layer of Cu 0.5 Ag 0.5 Br 0.9
I 0.1 with a dried film thickness of 3.5 $\mu$.

This emulsion-coated dry plate was given a
flash exposure using a xenon flash lamp; it was
developed for 7 minutes at 25°C using a 3.7% aqueous
solution of triethylene tetramine. The sample was
heated for 10 minutes at 340 $\pm$ 10°C under a reduced
pressure of $10^{-5}$ Torr and an optical information
recording medium with a reflectivity of 28% was
obtained.

On this information recording medium, the
pit-recording was made using a He-Ne laser, a pulse
modulation of 100 n sec being applied using a sound-
optics modulating element. The wavelength of the laser
beam was 6328 $\overset{o}{A}$, the beam diameter was 1.0 $\mu$, the laser
intensity on the recording surface was 10 mW and the
laser beam scanning speed was 5.0 m/sec. The recorded
pit was read with reflected light from a He-Ne laser
for reproduction, the laser intensity at the disk
surface being 2 mW and the contrast ratio thereof 0.6
to 0.7 (excellent) and the recording and reproducing
SN ratio was more than 40 dB.

Example 3

A cuprous halide emulsion containing Au was
obtained in the same manner as Example 1 with an
exception that $HAuCl_4$ was used in place of $AgNO_3$
and an emulsion layer of Cu 0.92 Au 0.08 Br 0.91 I 0.09
was provided on the glass base plate.

After exposing to indoor light for 5 minutes,
development was made for 10 minutes at 25°C using
aforesaid developer-1 and then physical development
was made for 10 minutes using 5% AgCl solution and an
optical information recording medium with a reflectivity
of 35% was obtained.

- 14 -

On this information recording medium, the pit-recording was made using a He-Ne laser, a pulse modulation of 100 n sec being applied using a sound-optics modulating element.  The wavelength of the laser beam was 6328 Å, the beam diameter was 1.0 $\mu$, the laser intensity on the recording surface was 10 mW and the laser beam scanning speed was 5.0 m/sec.  The recorded pit was read with reflected light from a He-Ne laser for reproduction, the laser intensity at the disk surface being 2 mW and the contrast ratio thereof 0.6 to 0.7 (excellent) and the recording and reproducing SN ratio was more than 40 dB.

- 15 -

## C L A I M S

1. An optical information recording medium comprising a support and a recording layer, characterised in that said recording layer is prepared by developing, after exposure, a dispersion layer containing fine grains of a photosensitive copper compound.

2. A medium according to claim 1, wherein said photosensitive copper compound is represented by the formula:

$$CuxMyX$$

wherein M represents a metal other than copper, X represents one or more Cl, Br or I atoms and x and y are such that $0.5 < x < 1.0$  and  $0 < y < 0.5$.

3. A medium according to claim 1 or 2, wherein said fine grains have an average diameter of $0.01 - 2.0 \mu$.

4. A medium according to claim 3, wherein said fine grains have an average diameter of $0.1 - 1.0 \mu$.

5. Process for preparing an optical information recording medium as claimed in any one of the preceding claims characterised by exposing and developing a dispersion layer containing fine grains of a photosensitive copper compound.

6. Process according to claim 5 wherein the developed layer is fixed.

7. Process according to claim 5 or 6 wherein said dispersion layer is also physically developed.

- 16 -

8. Process according to any one of claims 5 to 7 wherein said dispersion layer is developed in the presence of a chelating agent for $Cu^{2+}$.

9. Process according to any one of claims 5 to 8 wherein said dispersion layer is developed with a developing solution containing a reducing agent.

10. An optical information recording medium precursor comprising a support and a layer to be developed into a recording layer characterised in that said layer is a dispersion layer containing fine grains of a photosensitive copper compound.

# FIG. 1

2

1

# FIG. 2

3

1

# FIG. 3

5
4
1

# FIG. 4

6   7

5
4
1

# FIG. 5

8
5
4

1

# FIG. 6

5
4
9

1

# FIG. 7

11   10

5
4

1